# EUROPÄISCHE PATENTSCHRIFT

(11) **EP 3 043 981 B1**
(45) Veröffentlichungstag und Bekanntmachung des Hinweises auf die Patenterteilung: **29.11.2017**
(21) Anmeldenummer: 14761370.7
(22) Anmeldetag: 09.09.2014
(51) Int. Cl.: B29C 69/02, B30B 9/32, B65D 1/02

(54) **VORRICHTUNG UND VERFAHREN ZUM KOMPRIMIEREN VON BEHÄLTNISSEN**
APPARATUS AND METHOD FOR COMPRESSING CONTAINERS
DISPOSITIF ET PROCÉDÉ PERMETTANT DE COMPRIMER DES CONTENANTS

(30) Priorität: 09.09.2013 DE 102013109840
(43) Veröffentlichungstag der Anmeldung: 20.07.2016
(73) Patentinhaber: Krones AG, 93073 Neutraubling (DE)
(72) Erfinder: KRÜGER, Jochen, 93073 Neutraubling (DE)
(74) Vertreter: Bittner, Bernhard
(86) Internationale Anmeldenummer: PCT/EP2014/069148
(87) Internationale Veröffentlichungsnummer: WO 2015/032960

(56) Entgegenhaltungen:
- DE-A1-102012 101 507
- JP-A- H07 314 194
- US-A- 4 208 960
- US-A- 5 292 242

## Beschreibung

Die vorliegende Erfindung bezieht sich auf eine Vorrichtung und ein Verfahren zum Komprimieren von Behältnissen und insbesondere von Kunststoffbehältnissen. Die vorliegende Erfindung wird unter Bezugnahme auf Kunststoffbehältnisse beschrieben, es wird jedoch darauf hingewiesen, dass die Vorrichtung auch auf andere Behältnisse aus einem verformbaren Material anwendbar ist. Insbesondere im professionellen Schankbereich ist es aus dem Stand der Technik seit langem bekannt, dass Behältnisse mit großem Volumen, beispielsweise sogenannte Kegs mit einem Füllvolumen von 20 oder mehr Litern vorgesehen werden, welche in Zapfanlagen entleert werden. Das Handling derartiger Behältnisse gestaltet sich dabei oftmals relativ schwierig, da die relativ schweren Fässer auch ein relativ großes Volumen aufweisen und oft über längere Stecken transportiert werden müssen. Ausgehend von diesen Problematiken ist die Anmelderin der vorliegenden Patentanmeldung einen anderen Weg gegangen.

Diese hat in einer noch unveröffentlichten Anmeldung vorgeschlagen, dass zunächst Kunststoffbehältnisse hergestellt werden, diese anschließend komprimiert und ineinander gestapelt werden, um in einem weiteren Vorgang, beispielsweise bei einem Abfüller, expandiert und damit dabei gleichzeitig befüllt werden. Allerdings existiert derzeit noch keine zufriedenstellende Lösung für ein derartiges Komprimieren der Behältnisse.

Der vorliegenden Erfindung liegt daher die Aufgabe zugrunde, eine Vorrichtung und ein Verfahren zur Verfügung zu stellen, welche einerseits ein kontrolliertes Komprimieren dieser Behältnisse ermöglichen und welche andererseits auch eine maschinelle Herstellung derartiger komprimierter Behältnisse erlauben.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung nach Anspruch 1 zum Komprimieren von Behältnissen und insbesondere von Kunststoffbehältnissen weist eine erste Halteeinrichtung auf, welche geeignet ist, einen ersten Bereich eines zu komprimierenden Behältnisses zu halten sowie eine zweite Halteeinrichtung, welche geeignet ist, einen zweiten Bereich des zu komprimierenden Behältnisses zu halten, wobei der zweite Bereich von dem ersten Bereich beabstandet ist. Insbesondere sind dabei der erste Bereich und der zweite Bereich des Behältnisses in einer Längsrichtung des Behältnisses voneinander beabstandet. Insbesondere handelt es sich bei dem ersten Bereich um einen Mündungsbereich des Behältnisses und bei dem zweiten Bereich um einen Bodenbereich.

Weiterhin weist die Vorrichtung eine Bewegungseinrichtung auf, welche geeignet ist, die erste Halteeinrichtung auf die zweite Halteeinrichtung in einer Zustellrichtung zuzubewegen, um das zwischen der ersten Halteeinrichtung und der zweiten Halteeinrichtung befindliche Behältnis zu komprimieren. Weiterhin weist die Vorrichtung eine Transporteinrichtung auf, welche das Behältnis in einer vorgegebenen Transportrichtung, welche sich von der Zustellrichtung unterscheidet, zu transportieren, wobei die Transporteinrichtung geeignet ist, das Behältnis in dieser Transportrichtung in eine Position zu transportieren, in welche die erste Halteeinrichtung mit dem ersten Bereich des Behältnisses in Kontakt gelangt bzw. in Kontakt gelangen kann. Vorteilhaft ist die Halteeinrichtung geeignet, das Behältnis unterhalb die erste Halteeinrichtung zu fördern bzw. zu transportieren.

Es wird daher vorgeschlagen, dass der eigentlichen Komprimierungseinrichtung, welche die Behältnisse komprimiert, diese Behältnisse mittels einer Transporteinrichtung zugeführt werden. Auf diese Weise kann eine maschinelle Herstellung derartiger komprimierter Behältnisse erreicht werden. Eine Vorrichtung nach dem Oberbegriff von Anspruch 1 wird in der Druckschrift US 5,292,242 offenbart.

Die oben beschriebene Komprimierungseinrichtung wird im internen Stand der Technik der Anmelderin üblicherweise allenfalls zum Entleeren von Behältnissen eingesetzt, nicht jedoch zum Herstellen von komprimierten Behältnissen. Dies beruht auf einem neuen Ansatz der Anmelderin. Es wird also hier der Vorrichtung ein gefertigtes Behältnis zugeführt, um insbesondere in einem unbefüllten Zustand komprimiert zu werden. Vorteilhaft sind die Bewegungsrichtung bzw. Transportrichtung und die oben genannte Zustellrichtung senkrecht zueinander. Bevorzugt verläuft die Transportrichtung horizontal und die Zustellrichtung vertikal. So ist es beispielsweise möglich, dass die zu komprimierenden Behältnisse unter die erste Halteeinrichtung gefördert werden und diese dann auf das Behältnis abgesenkt wird, um dieses zu komprimieren.

Vorteilhaft weist die Vorrichtung auch eine Einrichtung zum Herstellen der Kunststoffbehältnisse auf, wie insbesondere eine Blasformmaschine, welche besonders bevorzugt vor der Transporteinrichtung und auch vor der eigentlichen Komprimierungseinrichtung angeordnet ist. Bei diesem Konzept wird daher vorgeschlagen, dass zunächst die Behältnisse, bei denen es sich insbesondere um PET-Großbehälter handelt, gefertigt werden, diese anschließend zu der Komprimierung gefördert werden und dort komprimiert werden. Anschließend können die so hergestellten komprimierten Behältnisse palettiert werden und beispielsweise zu einem Abfüller transportiert werden. Bevorzugt handelt es sich bei der Blasformmaschine um eine Streckblasmaschine.

Bei einer weiteren vorteilhaften Ausführungsform weist die Komprimierungseinrichtung ein Druckbeaufschlagungsmittel auf, welches geeignet ist, die Behältnisse während ihres Komprimierens mit einem Innendruck zu beaufschlagen, der größer ist, als der Umgebungsdruck. Die Anmelderin hat herausgefunden, dass sich eine derartige Druckbeaufschlagung vorteilhaft auf den Komprimierungsvorgang auswirkt, da das Behältnis so entlang einer umlaufenden Faltstelle komprimiert werden kann. Erfindungsgemäss weist die Vorrichtung einen Träger auf, an dem mehrere erste Halteeinrichtungen zur Aufnahme der ersten Bereiche der Behältnisse angeordnet sind. So ist es beispielsweise möglich, dass, insbesondere in der Transportrichtung der Behältnisse mehrere derartiger Halteeinrichtungen hintereinander an dem besagten Träger bzw. Stempel angeordnet sind. In diesem Falle kann dabei eine vorbestimmte Anzahl von Behältnissen dieser Vielzahl an Haltevorrichtungen zugeführt werden und im Wesentlichen gleichzeitig komprimiert werden. Es befinden sich wenigstens zwei, bevorzugt wenigstens drei und besonders bevorzugt wenigstens vier derartige Halteeinrichtungen an einem gemeinsamen Träger. Unter einem Aufnehmen der Behältnisse wird dabei nicht notwendigerweise verstanden, dass die Behältnisse innerhalb der Halteeinrichtungen aufgenommen werden, es genügt, dass die Behältnisse mit den Halteeinrichtungen in Kontakt kommen. Vorzugsweise weisen jedoch die Halteeinrichtungen Aufnahmeelemente zum Aufnehmen wenigstens eines Abschnitts der Behältnisse auf, insbesondere eines Mündungsabschnitts der Behältnisse.

Bei einer weiteren vorteilhaften Ausführungsform weist die Vorrichtung Positioniermittel auf, welche wenigstens ein Behältnis und bevorzugt mehrere Behältnisse während ihres Transports bezüglich einander positioniert. Insbesondere werden dabei diese Behältnisse so zueinander angeordnet, dass jedes Behältnis von der diesem Behältnis zugeordneten Halteeinrichtung aufgenommen bzw. erfasst und so komprimiert werden kann.

Bei einer weiteren vorteilhaften Ausführungsform transportiert die Transporteinrichtung die Behältnisse wenigstens zeitweise getaktet. Dies ist dahingehend zu verstehen, dass die Behältnisse nicht kontinuierlich gefördert werden, sondern zumindest zeitweise in einer Position entlang der Transportrichtung verharren. Dies ist dabei insbesondere diejenige Position, in der auch die Halteeinrichtungen auf die Behältnisse abgesenkt werden, um diese zu komprimieren. Es wäre jedoch auch möglich, dass sich die Halteeinrichtung ebenfalls zeitweise in der Transportrichtung der Behältnisse mitbewegt. Dies ist jedoch technisch aufwendiger. Bei einer weiteren vorteilhaften Ausführungsform bewegt sich die Halteeinrichtung mit den Behältnissen in der Transportrichtung mit. So wäre es beispielsweise möglich, dass eine und bevorzugt mehrere zweite Halteeinrichtungen an einem Träger der Transporteinrichtung, wie beispielsweise einem Transportband oder einem Trägerrad oder bevorzugt auch einer umlaufenden Schiene, angeordnet sind. Dabei können die Behältnisse bereits in diese zweiten Halteeinrichtungen eingesetzt werden und anschließend mit den zweiten Halteeinrichtungen zu den ersten Halteeinrichtungen gefördert werden.

Vorteilhaft ist daher an der Transporteinrichtung eine Vielzahl von zweiten Halteeinrichtungen angeordnet. Bei einer bevorzugten Ausführungsform können sich diese Halteeinrichtungen unabhängig voneinander bewegen. Dabei ist es insbesondere auch möglich, dass eine Teilung zwischen einzelnen zweiten Halteeinrichtungen entlang des Transportpfades der zweiten Halteeinrichtungen geändert wird. So wäre es beispielsweise möglich, dass die einzelnen Halteeinrichtungen jeweils einen magnetischen Antrieb aufweisen und auf diese Weise die Bewegungen der einzelnen Halteeinrichtungen unabhängig voneinander gesteuert werden können. Bevorzugt ist zum Bewegen der Halteeinrichtung ein Antrieb in der Art eines Linearmotors vorgesehen.

Bei einer weiteren vorteilhaften Ausführungsform weist die Vorrichtung eine in der Transportrichtung der Behältnisse stromabwärts bezüglich der ersten Halteeinrichtungen angeordnete Inspektionseinrichtung zum Inspizieren des komprimierten Behältnisses auf. Dabei kann diese Inspektionseinrichtung insbesondere überprüfen, ob eine Faltkante des komprimierten Behältnisses sauber gekrümmt ausgebildet ist oder ob an einzelnen Stellen des komprimierten Behältnisses Weißbruch oder andere Störungen aufgetreten sind. Vorteilhaft handelt es sich hierbei um eine optische Inspektionseinrichtung, welche den Zustand der komprimierten Behältnisse berührungslos überprüft. Vorteilhaft weist die Inspektionseinrichtung eine Bildaufnahmeeinrichtung wie etwa eine Kamera auf.

Bei einer weiteren vorteilhaften Ausführungsform weist die Vorrichtung weiterhin eine Verschließ- oder Abdeckeinrichtung auf, welche auf die Mündungen der komprimierten Behältnisse ein Verschlusselement bzw. ein Deckelelement anbringt. Dieses Deckelelement kann dabei beispielsweise als Staubschutz dienen.

Weiterhin weist die Vorrichtung bevorzugt eine Entnahmeeinrichtung zum Entnehmen der Behältnisse aus den zweiten Halteeinrichtungen auf. Bei einer weiteren bevorzugten Ausführungsform sind auch Auswurf- oder Lösemittel vorgesehen, welche die komprimierten Behältnisse von den ersten Halteeinrichtungen ablösen. Nach dem Komprimieren der Behältnisse können diese an den ersten Halteeinrichtungen haften. Es wird daher bevorzugt vorgeschlagen, dass ein Lösemittel vorgesehen ist, welches aktiv die Behältnisse von den ersten Halteeinrichtungen trennt. Dies kann beispielsweise durch einen Druck auf den Mündungsbereich der Behältnisse erreicht werden.

Es wäre jedoch alternativ oder zusätzlich auch möglich, das Behältnis mittels Druckluft abzulösen. So kann auch Druckluft zwischen den Stempel bzw. die erste Halteeinrichtung und das Behältnis gebracht werden, um das Behältnis abzulösen. Die Druckluft wird bevorzugt außerhalb der Zentrier-/Dichtglocke zugeführt, so dass das Behältnis durch die Druckluft nicht wieder aufgeblasen wird. Die bedeutet, dass die Druckluft nicht in das Behältnis hinein gelangt.

Vorteilhaft transportiert die Transporteinrichtung bzw. transportieren die Transporteinrichtungen die zweiten Halteeinrichtungen entlang eines umlaufenden Transportpfades. So kann beispielsweise ein Träger vorgesehen sein, an dem diese Halteeinrichtungen angeordnet sind. Dies kann ein beweglicher Träger sein, wie etwa ein Transportrad oder ein sog. Teilungsverzugsstern. Es wäre jedoch auch möglich und bevorzugt, dass es sich bei dem Träger um einen stationären Träger handelt, wie etwa eine Schiene, auf der sich die zweiten Halteeinrichtungen bewegen können. Zur Bewegung der Halteeinrichtungen können an dieser Schiene Elektromotoren angeordnet sein, so dass insgesamt ein linearmotorischer Antrieb entsteht.

Bei einer weiteren vorteilhaften Ausführungsform ist die zweite Halteeinrichtung mehrteilig ausgebildet. Vorteilhaft handelt es sich bei der ersten Halteeinrichtung um eine Halteeinrichtung, welche einen Mündungs- bzw. Schulterbereich des Behältnisses hält und bei der zweiten Halteeinrichtung um eine Halteeinrichtung, welche den Bodenbereich des zu komprimierenden Behältnisses hält. Damit wird bevorzugt das Behältnis entlang seiner Längsrichtung komprimiert. Dabei wird bevorzugt ein Mündungsbereich in einen Bodenbereich des Behältnisses eingeschoben. Wenn, wie oben erwähnt, die zweite Halteeinrichtung mehrteilig ausgebildet ist, ist es möglich, dass die Behältnisse zu der ersten Halteeinrichtung gefördert werden und dann die zweite Halteeinrichtung seitlich auf die Behältnisse zugestellt wird, um die jeweiligen Bodenbereiche aufzunehmen.

Vorteilhaft werden dann die Teile der zweiten Halteeinrichtung in einer Richtung auf die Behältnisse zugestellt, welche weder mit der Transportrichtung noch mit der Zustellrichtung übereinstimmt. Vorteilhaft ist diejenige Richtung, in der die Teile der zweiten Halteeinrichtung auf die Behältnisse zugestellt werden, senkrecht zu der Transportrichtung und/oder senkrecht zu der Zustellrichtung der ersten Halteeinrichtung.

Die vorliegende Erfindung ist weiterhin auf ein Verfahren nach Anspruch 8 zum Komprimieren von Behältnissen gerichtet. Dabei werden zunächst Kunststoffbehältnisse bereitgestellt und anschließend diese Kunststoffbehältnisse komprimiert, wobei eine erste Halteeinrichtung einen ersten Bereich des zu komprimierenden Behältnisses hält, eine zweite Halteeinrichtung einen zweiten Bereich des zu komprimierenden Behältnisses hält, wobei der zweite Bereich von dem ersten Bereich beabstandet ist und eine Bewegungseinrichtung die erste Halteeinrichtung auf die zweite Halteeinrichtung in einer Zustellrichtung zu bewegt, um das zwischen der ersten Halteeinrichtung und der zweiten Halteeinrichtung befindliche Behältnis zu komprimieren. Es wird das Behältnis mit einer Transporteinrichtung in einer vorgegebenen Transportrichtung zu der ersten Halteeinrichtung transportiert. Bevorzugt wird das Behältnis in einen Bereich direkt unter der ersten Halteeinrichtung transportiert, sodass diese erste Halteeinrichtung auf das Behältnis zugestellt werden kann. Vorteilhaft werden die leeren Behältnisse transportiert und bevorzugt auch leere Behältnisse komprimiert. Bei einem weiteren vorteilhaften Verfahren unterscheiden sich die Transportrichtung der leeren Behältnisse und die Zustellrichtung der ersten Halteeinrichtung.

Vorteilhaft werden die Behältnisse unmittelbar vor dem Komprimieren hergestellt, beispielsweise mittels einer Blasformmaschine. Es wäre jedoch auch denkbar, dass die Behältnisse mehrmals verwendet werden. Vorzugsweise weisen die Behältnisse in einem nicht komprimierten Zustand ein Füllvolumen auf, welches größer ist als 5l, bevorzugt größer als 10l, bevorzugt größer als 20l. Bevorzugt weisen die Behältnisse einen kreisförmigen Querschnitt auf.

Vorteilhaft werden die Behältnisse getaktet, transportiert und insbesondere wird der Transport angehalten, sobald sich die Behältnisse unterhalb der ersten Halteeinrichtungen befinden.

Bei einem weiteren vorteilhaften Verfahren werden die Behältnisse zumindest abschnittsweise entlang einer geradlinigen Bahn gefördert. Es wäre jedoch auch möglich, dass die Behältnisse an einem drehbaren Träger gefördert werden und mehrere Halteeinrichtungen entlang eines Kreissegments hintereinander angeordnet sind. Bevorzugt werden die Behältnisse zumindest in demjenigen Abschnitt, der unmittelbar vor den ersten Halteeinrichtungen liegt, entlang einer geradlinigen Bahn transportiert und besonders bevorzugt auch in demjenigen Abschnitt, der sich direkt an die ersten Halteeinrichtungen anschließt.

Bei einem bevorzugten Verfahren ist es möglich, dass eine, bevorzugt mehrere Halteeinrichtungen in einer oberen Stellung sind, in der sie über den Behältnissen angeordnet sein können. Bevorzugt wird diese Position der Halteeinrichtungen abgefragt bzw. überprüft. Weiterhin kann bevorzugt an den einzelnen Halteeinrichtungen jeweils ein Anschlagelement angeordnet sein, welches während des Komprimierungsvorgangs eine Umfangsfalte, welche bei dem Komprimieren entsteht, berührt und damit den Komprimierungsvorgang fördert.

Vorteilhaft werden wenigstens zwei, bevorzugt wenigstens drei Behältnisse im Wesentlichen gleichzeitig komprimiert. Vorteilhaft werden die Behältnisse in einer aufrecht stehenden Position komprimiert.

Weitere Vorteile und Ausführungsformen ergeben sich aus den beigefügten Zeichnungen. Darin zeigen:
- Fig. 1: Eine schematische Darstellung zur Veranschaulichung eines erfindungsgemäßen Verfahrens;
- Fig. 2: eine Vorrichtung zum Komprimieren von Behältnissen in einer ersten Ausführungsform;
- Fig. 3: eine Draufsicht auf eine erfindungsgemäße Vorrichtung;
- Fig. 4: eine Darstellung einer erfindungsgemäßen Vorrichtung in einem weiteren Verfahrensstadium;
- Fig. 5: eine Darstellung der erfindungsgemäßen Vorrichtung in einem weiteren Verfahrensstadium;
- Fig. 6: eine Darstellung der erfindungsgemäßen Vorrichtung in einem weiteren Verfahrensstadium;
- Fig. 7: eine Detaildarstellung zur Veranschaulichung einer Komprimierung eines Behältnisses;
- Fig. 8: eine weitere Darstellung der erfindungsgemäßen Vorrichtung in einem weiteren Verfahrensstadium;
- Fig. 9: eine Darstellung von Halteeinrichtungen mit Behältnissen;
- Fig. 10: eine weitere Darstellung eines erfindungsgemäßen Verfahrens;
- Fig. 11: eine Darstellung einer erfindungsgemäßen Vorrichtung mit einer weiteren vorteilhaften Anordnung der zweiten Halteeinrichtungen;
- Fig. 12: die Darstellung aus Fig. 11 bei geschlossenen Halteeinrichtungen;
- Fig. 13: eine weitere Darstellung zur Veranschaulichung der Komprimierung eines Behältnisses;
- Fig. 14: eine weitere Darstellung zur Veranschaulichung der Komprimierung eines Behältnisses;
- Fig. 15: eine weitere Darstellung zur Veranschaulichung der Komprimierung eines Behältnisses; und
- Fig. 16: eine Darstellung einer erfindungsgemäßen Vorrichtung.

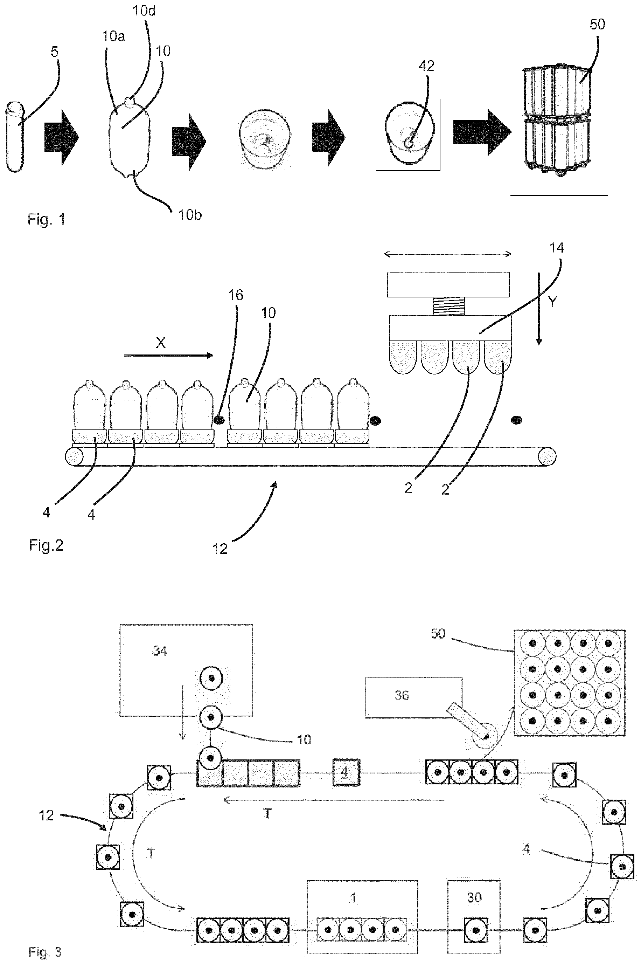

Fig. 1 zeigt eine Darstellung des Verfahrens zum Herstellen der komprimierten Behältnisse. Dabei wird zunächst von einem Kunststoffvorformling 5 ausgegangen, der mittels einer Umformungseinrichtung, wie beispielsweise einer Streckblasmaschine, zu dem Behältnis 10 umgeformt wird. In einem weiteren Verfahrensschritt wird dieses umgeformte Behältnis, insbesondere mit der erfindungsgemäßen Vorrichtung komprimiert, derart, dass ein Mündungsbereich des Kunststoffbehältnisses in einem Bodenbereich des Kunststoffbehältnisses eingeschoben wird. Das Bezugszeichen 10a kennzeichnet einen ersten Bereich des zu komprimierenden Behältnisses, bei dem es sich um einen Bereich handelt, der auch die Mündung des Behältnisses enthält. Das Bezugszeichen 10b kennzeichnet einen zweiten Bereich des zu komprimierenden Behältnisses, bei dem es sich hier um einen Bodenbereich handelt.

In einem weiteren Verfahrensschritt wird auf die Mündung eine Kappe oder ein Verschluss 42 aufgesetzt. Anschließend wird eine Vielzahl derartiger komprimierter Behältnisse zu einer Palette 50 zusammengestellt.

Fig. 2 zeigt eine Darstellung einer erfindungsgemäßen Vorrichtung zum Komprimieren der Behältnisse. Dabei sind hier vier erste Halteeinrichtungen 2 vorgesehen, die zum Komprimieren der Behältnisse mit dem Mündungsbereich der Behältnisse zusammenwirken und diesen in Richtung der zweiten Halteeinrichtungen 4 pressen bzw. komprimieren.

Bei der hier gezeigten Ausführungsform sind vier derartige erste Halteeinrichtungen 2 an einem gemeinsamen Träger 14 angeordnet und können so in der Zustellrichtung Y hier nach unten auf die Behältnisse 10 zugestellt werden.

Das Bezugszeichen 12 kennzeichnet in seiner Gesamtheit eine Transporteinrichtung, welche hier zum Transportieren der Behältnisse dient. Genauer gesagt führt diese Transporteinrichtung die unkomprimierten Behältnisse den ersten Halteeinrichtungen 2 zu und fördert danach auch bevorzugt die komprimierten Behältnisse von der Komprimierungseinrichtung abtransportiert. Das Bezugszeichen 16 bezieht sich auf eine Positionsbestimmungseinheit, wie etwa einer Lichtschranke, mit der die Position der Behältnisse entlang ihrer Transportrichtung X bestimmt werden kann. Dabei wäre es denkbar, dass die Transporteinrichtung selbst in Abhängigkeit von einem Signal dieser Positionierungseinheit gesteuert wird. Es wäre jedoch auch möglich dass die Bewegungen der einzelnen zweiten Halteeinrichtungen 4 unabhängig voneinander steuerbar sind und bevorzugt auch diese Steuerungen in Abhängigkeit von der Positionsbestimmungseinheit erfolgen.

Daneben können auch Sperrelemente vorgesehen sein, welche einen Weitertransport der zweiten Halteeinrichtungen 4 entlang der Transportrichtung x wenigstens zeitweise verhindern.

Bei der in Fig. 2 gezeigten Ausgangssituation (die folgende Beschreibung bezieht sich jedoch auch auf weitere Figuren) sind sämtliche ersten Halteeinrichtungen 2 bzw. alle Stempel in einer oberen Position. Im Verfahren wird vorteilhaft abgefragt, ob tatsächlich die Halteeinrichtungen in einer oberen Stellung sind. Weiterhin wird zu diesem Zeitpunkt bevorzugt ein (nicht gezeigter) Anschlag an den Halteeinrichtungen vorgeheizt, insbesondere auf eine Temperatur in einem Bereich zwischen 50°C und 80°C, bevorzugt zwischen 55°C und 75°C, bevorzugt zwischen 60°C und 65°C. Dabei wird bevorzugt mittels einer Steuerung diese Temperatur abgefragt und geregelt. Untenstehend wird genauer der Zweck dieser Temperierung erläutert.

Bei der in Fig. 2 gezeigten Ausführungsform stehen hier vier Behältnisse in einem einzelnen Träger auf einem Transportband. Steuerungsseitig kann hier wiederum eine Abfrage erfolgen, ob tatsächlich sämtliche hier vier Behältnisse vorhanden sind. Solange dies noch nicht der Fall ist, kann eine Behältnissperre geschlossen sein, sodass vermieden wird, dass weniger als eine vorbestimmte Anzahl an Behältnissen, hier weniger als vier Behältnisse, zu den ersten Halteeinrichtungen gelangen.

Fig. 3 zeigt eine weitere Darstellung einer erfindungsgemäßen Vorrichtung. Auch hier ist wiederum die Transporteinrichtung 12 vorgesehen, welche hier die einzelnen zweiten Halteeinrichtungen 4 entlang eines umlaufenden Transportpfades T transportiert. Dieser Transportpfad enthält hier geradlinige Abschnitte und gekrümmte Abschnitte. Der Transportpfad verläuft jedoch bevorzugt in einer Ebene. Wie in der Figur gezeigt, werden zunächst in einer Umformungseinrichtung 34 die Kunststoffbehältnisse 10 erzeugt und anschließend in die jeweiligen zweiten Halteeinrichtungen 4 eingesetzt.

Anschließend werden die einzelnen Halteeinrichtungen 4 zu Vierergruppen gruppiert und gelangen in die erfindungsgemäße Vorrichtung 1, in der die Komprimierung der Kunststoffbehältnisse erfolgt. Bei der in Fig. 3 gezeigten Ausgestaltung ist die Bewegung jeder einzelnen Halteeinrichtung 4 unabhängig von den Bewegungen weiterer Halteeinrichtungen 4. Auf diese Weise können wahlweise unterschiedliche Gruppen erstellt werden, aber auch die Gruppen an Halteeinrichtungen wieder aufgelöst werden.

In der Transportrichtung der Behältnisse stromabwärts bezüglich der Vorrichtung 1 befindet sich eine Inspektionseinrichtung 30 welche die einzelnen hergestellten Kunststoffbehältnisse untersucht. Dabei kann in diesem Bereich bereits eine Vereinzelung der einzelnen Halteeinrichtungen 4 erfolgen. Anschließend werden die Halteeinrichtungen 4 mit den darin befindlichen komprimierten Behältnissen 10 einer Palettiereinrichtung 36 zugeführt, welche Paletten 50 von komprimierten Kunststoffbehältnissen bildet. Zwischen der Vorrichtung 1 und der Palettiereinrichtung kann sich noch eine Verschließeinrichtung (nicht gezeigt) befinden, welche Verschlüsse auf den Mündungen der komprimierten Behältnisse 10 anbringt.

Bei dem hier bzw. in der obigen Einleitung dargestellten Verfahren werden vier Behälter in einem Träger bzw. Carrier hier mit einer maximalen Geschwindigkeit unter die ersten Halteeinrichtungen gefahren. Die Teilung ist dabei insbesondere durch die Größe der einzelnen Träger bzw. der zweiten Halteeinrichtungen 4 vorgegeben. Die Halteeinrichtungen 4 können selbst wiederum über Trägerelemente an der Transporteinrichtung 12 befestigt (bzw. beweglich angeordnet) sein. Bei einem weiteren Schritt wird abgefragt, ob tatsächlich die vier Behältnisse vorhanden sind.

Die Transporteinrichtung kann weiterhin Beschleunigung- und Verzögerungsbereiche aufweisen, welche die Transportbewegung der einzelnen Halteeinrichtungen beschleunigt oder verzögert. Alternativ kann die Transporteinrichtung jedoch auch ein Transportband sein, an dem die einzelnen Halteeinrichtungen angeordnet sind. Auch wäre die Verwendung von Transportketten oder drehbaren Transporteinrichtungen denkbar.

Die vier Stempel bzw. die ersten Halteeinrichtungen 2 fahren weiter bis kurz vor die Mündung der einzelnen Behältnisse. Auch kann wieder eine Abfragung der Position und Geschwindigkeit der einzelnen ersten Halteeinrichtungen vorgenommen werden. Vorteilhaft werden die ersten Halteeinrichtungen mit einer Geschwindigkeit auf die Kunststoffbehältnisse zugestellt, welche zwischen 100 mm/Sek. und 500 mm/Sek., bevorzugt zwischen 200 mm/Sek. und 400 mm/Sek. und besonders bevorzugt bei ca. 300 mm/Sek. liegt.

Die einzelnen Stempel bzw. Halteeinrichtungen 2 werden nun langsam nach unten bewegt und komprimieren so die Behältnisse. Dabei werden bevorzugt die Behältnisse zunächst zentriert. Vorteilhaft weisen dabei die einzelnen Halteeinrichtungen jeweils Zentrierelemente wie sogenannte Zentrierglocken auf. Vorteilhaft weisen die einzelnen ersten Halteeinrichtungen auch Abdichteinrichtungen bzw. Elemente auf, welche einen Luftfluss durch die Mündungen während des Komprimierens begrenzen.

Vorteilhaft wird wieder über eine Erfassungseinrichtung eine Position der ersten Halteeinrichtungen 2 in der Zustellrichtung Y abgefragt.

Weiterhin werden die Behältnisse mit einem vorgegebenen Druck vorgespannt, beispielsweise mit 0,5 bar über dem atmosphärischen Druck. Vorteilhaft sind auch Druckmesseinrichtungen vorgesehen, welche den Innendruck in den Behältnissen während des Komprimierungsvorgangs bestimmen. Auch können Steuerungseinrichtungen vorgesehen sein, welche den Innendruck in dem Behältnis regeln.

Nunmehr beschleunigen die Halteeinrichtungen nach unten und auf diese Weise werden die Behältnisse eingerollt. Dabei baut sich in den Behältnissen ein Innendruck auf. Dabei können wiederum bestimmte Parameter, wie eine Position der Halteeinrichtungen, eine Anpresskraft sowie auch die Geschwindigkeit überprüft werden. Vorteilhaft liegt eine Kompressionskraft in einem Bereich von 50kN bis 100kN, bevorzugt zwischen 60kN und 80kN und bevorzugt bei etwa 70 kN (berechnet hier für vier Halteeinrichtungen). Die Geschwindigkeit, mit der die Zustellung bzw. die Komprimierung der Kunststoffbehältnisse erfolgt, liegt bevorzugt zwischen 50 mm/Sek. und 200 mm/Sek., bevorzugt zwischen 70 mm /Sek. und 130 mm/Sek..

Vorteilhaft ist weiterhin eine Ventileinrichtung vorgesehen, welche ab einem bestimmten Überdruck im Inneren des Behältnisses öffnet, sodass der Maximaldruck im Inneren des Behältnisses nicht überschritten wird. Vorteilhaft liegt dieser Maximaldruck zwischen 2 bar und 3 bar und bevorzugt bei 2,5 bar. Bevorzugt kann hier eine mechanische und/ oder elektrische Regelung des Innendrucks in dem Behältnis erfolgen. Dabei kann beispielsweise eine definierte Düse oder Blende vorgesehen sein, jedoch auch ein Druckregelventil.

Während des Komprimierens ergibt sich bevorzugt eine umlaufende Einrollfalte des Behältnisses. Diese drückt bevorzugt bei der tiefsten Position der ersten Halteeinrichtung gegen einen Radius der ersten Halteeinrichtung und rollt sich dabei bevorzugt ein paar Millimeter nach außen. Bevorzugt wird auch wiederum die Endposition der Halteeinrichtungen abgefragt, was beispielsweise über einen Endschalter erfolgen kann oder auch über die Erfassung einer Position der Halteeinrichtungen.

Bevorzugt werden die ersten Halteeinrichtungen kurz in dieser Position gehalten, um, wie unten genauer beschrieben wird, die Einrollfalte an der besagten Nut zu temperieren.

Bei einem weiteren Verfahrensschritt fahren die Halteeinrichtungen, bevorzugt mit höherer Geschwindigkeit wieder nach oben. Dabei ist es denkbar, dass die Zentrierglocke oder ein weiteres Element den eingerollten Behälter nach unten abstößt. Die Geschwindigkeit dieser Rückstellbewegung liegt hier vorteilhaft wieder zwischen 200 mm/Sek. und 400 mm/Sek. und vorteilhaft bei ca. 300 mm/Sek.

Die nunmehr komprimierten bzw. eingerollten Behältnisse bleiben in der zweiten Halteeinrichtung bzw. der Bodentasse. In diesen Halteeinrichtungen werden die so eingerollten Behältnisse abtransportiert und gleichzeitig können weitere vier Behältnisse zu den ersten Halteeinrichtungen 2 transportiert werden. Auch hier kann auch wieder eine Abfrage erfolgen, ob die vier bereits komprimierten Behältnisse ausgefahren wurden. Zu diesem Zweck kann beispielsweise eine doppelte Lichtschranke vorgesehen sein.

Die eingerollten Behältnisse werden aus ihren Halteeinrichtungen entnommen, bevorzugt mit einer Staubkappe versehen und palettiert. Die leeren zweiten Halteeinrichtungen fahren wieder zur Blasformmaschine, um die nächsten Behältnisse aufzunehmen.

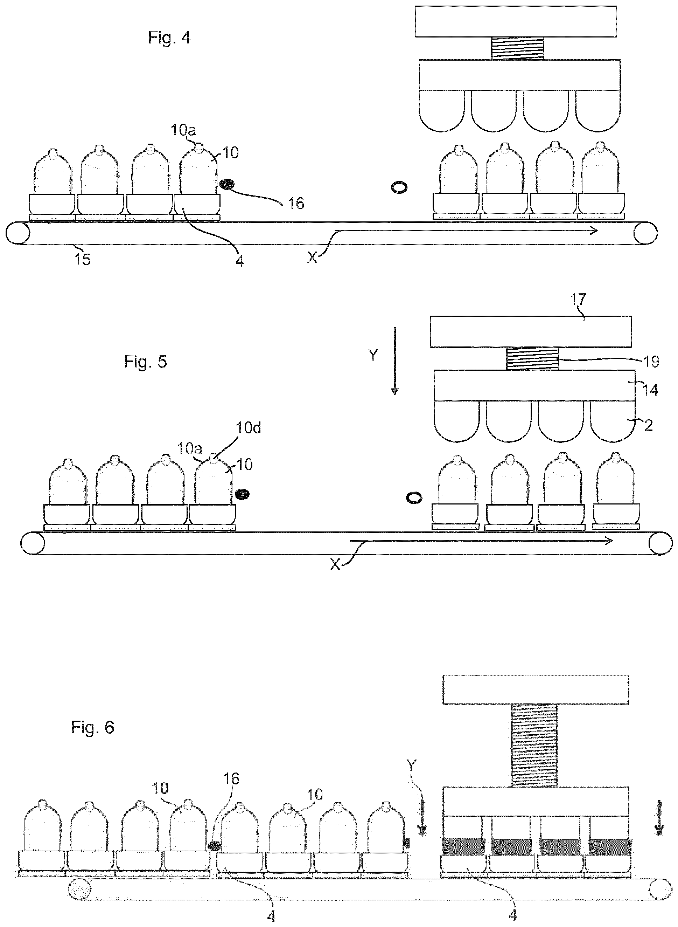

Fig. 4 zeigt eine weitere Darstellung einer erfindungsgemäßen Vorrichtung. Hier fahren die vier Behälter bzw. Behältnisse 10 mit einer maximalen Geschwindigkeit unter die Stempel bzw. die ersten Halteeinrichtungen. Zu diesem Zweck kann das Transportband 15 wieder eine Beschleunigungs- oder Verzögerungsrampe aufweisen. Man erkennt jedoch, dass in Fig. 4 die Position der einzelnen Behältnisse noch nicht exakt ausgerichtet ist. Zu diesem Zweck kann beispielsweise durch eine entsprechende Bewegung der Transporteinrichtung, aber auch durch eine individuelle Bewegung der einzelnen Halteeinrichtungen 4 eine exakte Positionierung vorgenommen werden. Die zweiten Halteeinrichtungen können aber auch so gebaut bzw. ausgeführt sein, dass sie aufgrund ihrer Größe schon die richtige Teilung der Behälter unter der Presse bzw. unter den ersten Halteeinrichtungen haben.

Bei der in Fig. 5 gezeigten Situation sind die Behältnisse 10, bzw. deren Mündungsbereiche 10a mit den Mündungen 10d genau unter den Halteeinrichtungen ausgerichtet. Das Bezugszeichen 17 kennzeichnet schematisch eine Antriebseinrichtung, welche die Zustellbewegung der ersten Halteeinrichtungen 2 bewirkt. Diese Antriebseinrichtung 17 kann dabei beispielsweise eine oder mehrere Antriebsspindeln 19 aufweisen. Daneben wäre es jedoch auch möglich, dass als Antrieb ein linearmotorischer oder ein pneumatischer oder ein hydraulischer Antrieb verwendet wird. Besonders bevorzugt wird ein hydraulischer Antrieb eingesetzt, der sich insbesondere durch seine kleine Baugröße und die Wartungsmöglichkeit auszeichnet.

Bei der in Fig. 6 gezeigten Situation wurden nunmehr die ersten Halteeinrichtungen 2 auf die zweiten Halteeinrichtungen 4 zugestellt und auf diese Weise die dazwischen liegenden Kunststoffbehältnisse komprimiert. Man erkennt, dass hier bereits zwei weitere Gruppen an Behältnissen bereit stehen können, welche nachfolgend zu komprimieren sind.

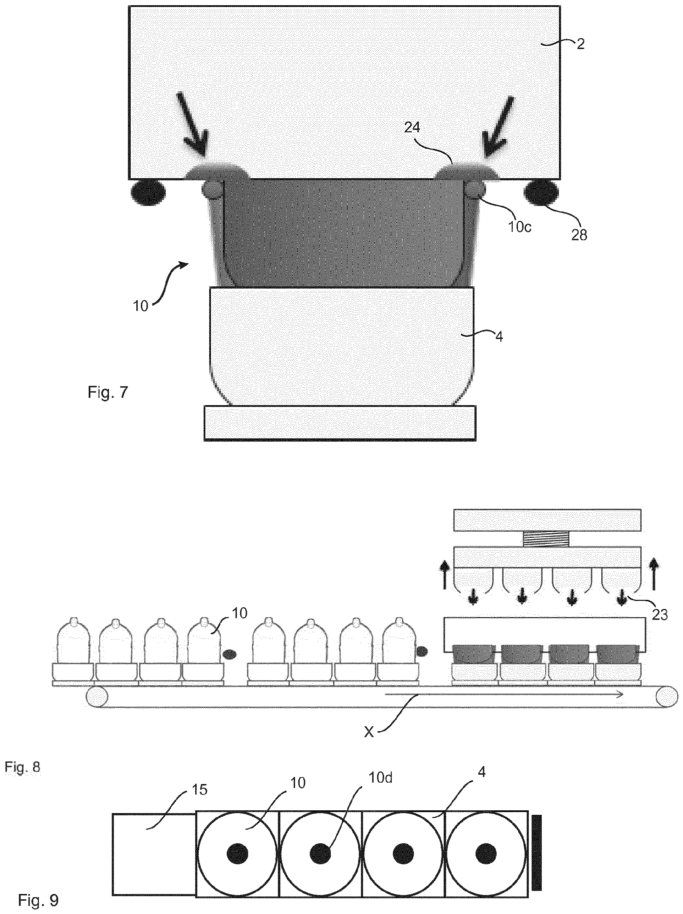

Fig. 7 zeigt eine detaillierte Darstellung eines Einrollprozesses. Dabei ist wieder die erste Halteeinrichtung 2 gezeigt, welche auf die zweite Halteeinrichtung 4 zugestellt wird. Die erste Halteeinrichtung weist dabei eine Umfangsnut 24 auf, welche beim Zusammendrücken des Behältnisses eine Einrollfalte 10c kontaktiert. Durch dieses Kontaktieren der Einrollfalte 10c kann der Einrollvorgang insgesamt verbessert werden und es kann insbesondere das Entstehen von Weißbrüchen in dem Behältnis verhindert werden. Vorteilhaft wird dieser umlaufende Anschlag, wie oben erwähnt, temperiert. Daneben weist die erste Halteeinrichtung bevorzugt auch eine Erweiterung auf, d.h. einen Abschnitt, in dem sich ein Querschnitt der Halteeinrichtung von unten nach oben erweitert. Dieser (in Fig. 7 nicht gezeigte) Abschnitt dient ebenfalls zum Einwirken auf die Einrollfalte 10c. Daneben können Positionserfassungsmittel 28 vorgesehen sein, welche eine Position der Einrollfalte 10c und oder eine Relativposition zwischen den Halteeinrichtungen 2, 4 erfassen.

Weiterhin wäre es auch möglich, die Druckluft, welche beim Komprimieren aus dem Behältnis herausgedrückt wird, wiederum zum Vorspannen der nachfolgenden Behältnisse zu nutzen und damit zu recyceln. Auch ist es denkbar, dass eine Abluft der vorgestellten Blasformmaschine genutzt werden kann, um die Behältnisse hier mit einem Druck zu beaufschlagen. Der Vorteil könnte darin bestehen, dass beispielsweise gereinigte Luft oder Sterilluft aus der Blasformmaschine auch zum Vorspannen genutzt werden kann. Auch kann die erzeugte Druckluft für pneumatische Antriebe verwendet werden.

Fig. 8 zeigt eine weitere Darstellung der erfindungsgemäßen Vorrichtung, wobei hier auch Zentrierelemente 23 angedeutet sind, welche beim Zustellen auf die Kunststoffbehältnisse 10 diese zentrieren. Dabei kann es sich beispielsweise um sog. Zentrierglocken handeln, welche einen Mündungsabschnitt der Behältnisse ausrichten.

Fig. 9 zeigt entsprechend eine Anordnung aus vier zweiten Halteeinrichtungen 4 mit darin angeordneten Kunststoffbehältnissen 10. Das Bezugszeichen 15 kennzeichnet ein Transportmittel wie ein Transportband oder einen Transportträger. Das Bezugszeichen 10d bezieht sich auf einen Mündungsabschnitt der Behältnisse 10.

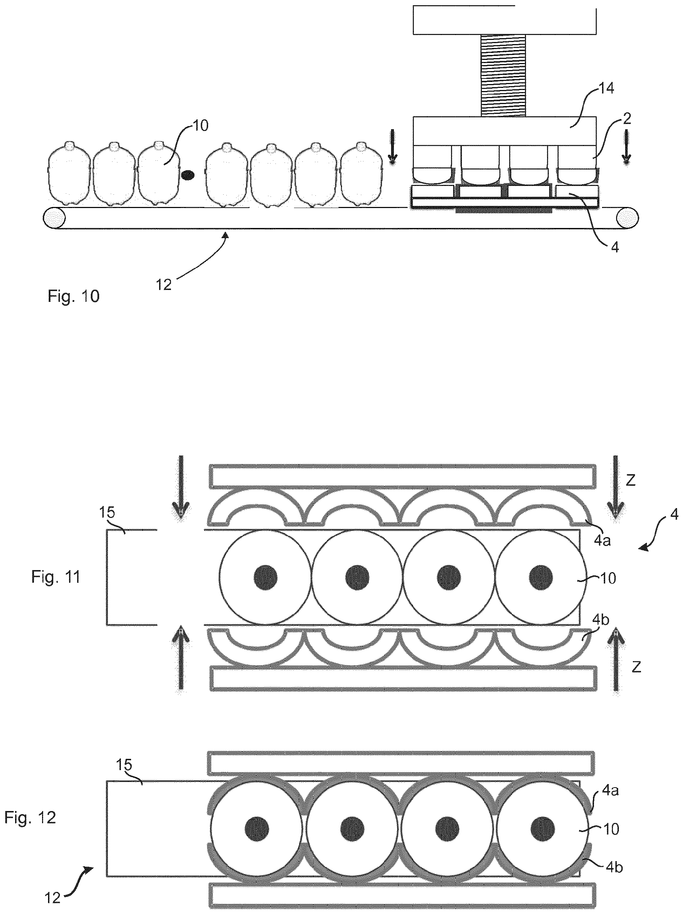

Bei der in Fig. 10 gezeigten Darstellung wurden, wie oben erwähnt, die Halteeinrichtungen 2 auf die Halteeinrichtungen 4 zugestellt und die Behältnisse sind damit vollständig komprimiert. Dabei ist es vorteilhaft, wenn beim Komprimieren keine scharfkantigen Faltungen mit sogenanntem Weißbruch entstehen, da die Behälter sonst nach dem Dekomprimieren und Befüllen unschöne Falten haben und an diesen Falten auch Schwachstellen entstehen, und damit die Behältnisse nicht mehr die geforderte Druckstabilität aufweisen und somit beispielsweise für karbonisierte Getränke unbrauchbar sind. Damit die Behältnisse allerdings gut komprimiert werden und durch die Stempel nicht nur einfach zusammengeknüllt werden, wird hier vorgeschlagen, dass die Behältnisse beispielsweise durch ein Ventil im Stempel, das auf der Mündung abdichtet, mit einem leichten Druck vorgespannt werden. Dann drückt die Halteeinrichtung 2 das Behältnis zusammen und durch die Volumenreduzierung steigt der Druck in dem Behältnis weiter an. Dabei wird darauf hingewiesen, dass der Innendruck in dem Behältnis auch nicht beliebig ansteigen darf, da sonst die Druckkraft extrem ansteigen würde und das Behältnis schließlich platzen könnte. Daher wird auch die Luft aus dem Behältnis ab einem bestimmten Druck geregelt abgelassen, um einen bestimmten Druck in dem Behältnis aufrecht zu erhalten. Wie oben erwähnt, hat die Anmelderin herausgefunden, dass der Einrollvorgang sich bei einem Druck im Bereich von 2 bis 2,9 bar und bevorzugt von ca. 2,2 bar (Überdruck) oder mehr schön einrollen lässt.

Für die Druckregelung kann ein elektronisches Druckregelventil eingesetzt werden, das ab einem vorgegebenen und erreichten Druck innerhalb des Behältnisses so weit öffnet, dass der Druck keinesfalls höher wird. Dies ist wiederum vorteilhaft, da die notwendige Kraft zum Komprimieren der Behältnisse direkt von dem Druck in dem Behältnis abhängt. Bei einem Innendruck von 2,5 bar beträgt die Kraft auf die Halteeinrichtungen, bzw. jede einzelne Halteeinrichtung bereits ca. 15,3 kN, was einer Gewichtskraft von ca. 1,53 t entspricht. Ist der Druck andererseits zu gering, so können sich an dem Behältnis unkontrollierte Falten mit Weißbruch bilden.

Es wäre weiterhin auch denkbar, den Druck aus dem Behältnis, beispielsweise über eine mechanische Drossel, wie eine Lochblende abzulassen. In diesem Falle wäre jedoch ein im Wesentlichen konstanter Volumenstrom erforderlich. Beispielsweise baut sich bei einem Volumenstrom von 41/Sek. durch eine Blende mit 4,6 mm Durchmesser in dem Behältnis ein Staudruck im Bereich von 2,5 bar auf, was zum gleichen Ergebnis führen würde.

Die Vorteile der Erfindung bestehen darin, dass sich die komprimierten Behältnisse auf diese Weise gut stapeln lassen, daneben sich auch kostengünstig transportieren lassen und dabei ihre Eigenschaften behalten. Die wieder ausgerollten Behältnisse haben noch die gleichen Barriereeigenschaften und die gleiche Druckstabilität wie vor dem Einrollen, sofern keine scharfkantigen Falten in Weißbruch im PET-Material entstehen.

Die Figuren 10 bis 12 zeigen eine weitere Ausgestaltung der erfindungsgemäßen Vorrichtung. Auch hier werden die Behältnisse 10 über eine Transporteinrichtung 12 an die ersten Halteeinrichtungen 2 herangeführt. Während jedoch sich bei dem vorangegangenen Ausführungsformen die Behältnisse bereits in den zweiten Halteeinrichtungen 4 befunden haben, sind nunmehr diese zweiten Halteeinrichtungen in bzw. bezüglich der Transportrichtung der Behältnisse stationär unterhalb der ersten Transporteinrichtungen 2 angeordnet. In diesem Falle werden die Behältnisse ebenfalls in die vorgesehene Position zur Komprimierung gefahren und dann werden die zweiten Halteeinrichtungen 4 geschlossen.

Fig. 11 veranschaulicht diesen Vorgang. Man erkennt, dass die zweiten Halteeinrichtungen 4 hier zweiteilig aufgebaut sind und einen Teil 4a und einen Teil 4b aufweisen. Sobald sich die Behältnisse 10 in der richtigen Position befinden, werden diese Teile 4a, 4b in der Richtung Z aufeinander zugestellt, sodass sich der in Fig. 12 gezeigte Zustand ergibt. Anschließend werden die Behältnisse mit den in Fig. 11 und 12 von oben kommenden ersten Halteeinrichtungen 2 (nicht gezeigt) komprimiert.

Diese Ausführungsform weist einen Vorteil auf, dass die zweiten Halteeinrichtungen 4 gegenüber den ersten Halteeinrichtungen 2 in der Transportrichtung X der Behältnisse 10 stets richtig positioniert sind. Allerdings müssen hier die zweiten Halteeinrichtungen zweiteilig und bevorzugt halbschalenartig ausgebildet sein.

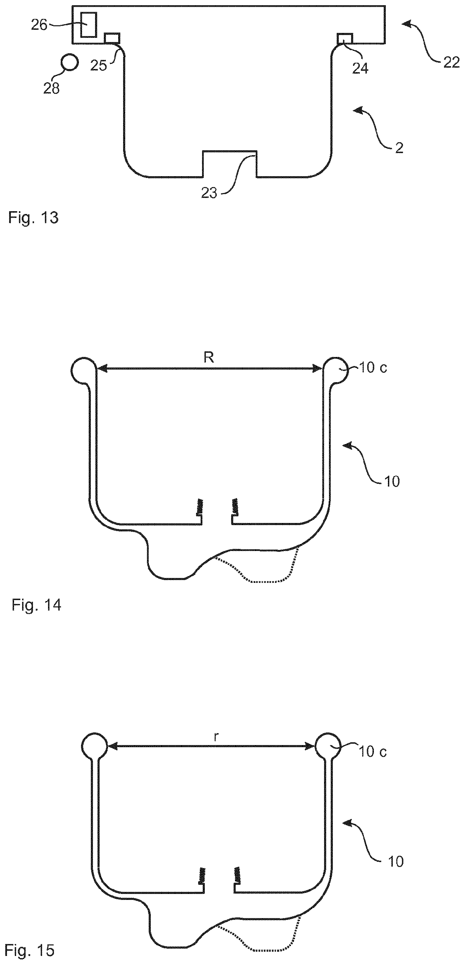

Fig. 13 veranschaulicht die Komprimierung des Behältnisses und insbesondere die Einwirkung auf die Einrollfalte 10c. Diese Einrollfalte 10c ist in Fig. 14 dargestellt. Man erkennt, dass die erste Halteeinrichtung 2 einen umlaufenden Vorsprung 22 aufweist. Dieser umlaufende Vorsprung bzw. Radius drückt beim Komprimieren des Behältnisses 10 gegen die Einrollfalte 10c und diese rollt sich ein paar Millimeter nach außen. Das Bezugszeichen 25 kennzeichnet einen Übergangsbereich der ersten Halteeinrichtung 2. In diesem Übergangsbereich 25 erweitert sich ein Querschnitt der ersten Halteeinrichtung 2 von unten nach oben. Dabei handelt es sich bevorzugt um eine stetige Erweiterung. Bevorzugt weist die Halteeinrichtung zumindest in dem Übergangsabschnitt einen kreisförmigen Querschnitt (senkrecht zur der Zustellrichtung) auf. Auch erkennt man, dass dieser Übergangsbereich gekrümmt ausgebildet ist. Das Bezugszeichen 24 kennzeichnet eine Erwärmungseinrichtung, welche den Anschlag bzw. auch den Übergangsbereich 25 erwärmt. Das Bezugszeichen 26 kennzeichnet grob schematisch eine Druckbeaufschlagungseinrichtung, welche durch Beaufschlagung mit Druckluft ein Ablösen des Behältnisses von der ersten Halteeinrichtung fördern kann

Mittels Positionsabfrageeinrichtungen 28 kann wiederum die Endposition abgefragt werden und es kann vorteilhaft auch die Position der Einrollfalte 10c überprüft werden. Das Bezugszeichen 23 kennzeichnet einen Zentrierabschnitt, der zum Zentrieren des Behältnisses dient, und der den Mündungsbereich des Behältnisses bzw. ein Gewinde des Behältnisses aufnehmen kann.

Fig. 14 zeigt eine Darstellung eines eingerollten Behältnisses. Dabei wurde hier eine Temperierung eingesetzt, das heißt mittels der Heizeinrichtung 24 wurde der Übergangsbereich 25 erwärmt. Man erkennt, dass die Einrollfalte 10c hier nach außen gedrückt ist und sich so der Radius R ergibt. Auf diese Weise ist es möglich, die komprimierten Behältnisse ineinander zu stapeln und auch wieder voneinander zu trennen.

Fig. 15 zeigt eine Darstellung, bei der keine Temperierung verwendet wurde. Man erkennt, dass hier der Radius r geringer ist, als der in Fig. 14 gezeigte Radius R, bzw. die Einrollfalte 10c weiter nach innen ragt. Diese Einrollfalten schnüren sich beim Stapeln eng um den nächsten Behälter und sie lassen sich schlechter wieder trennen

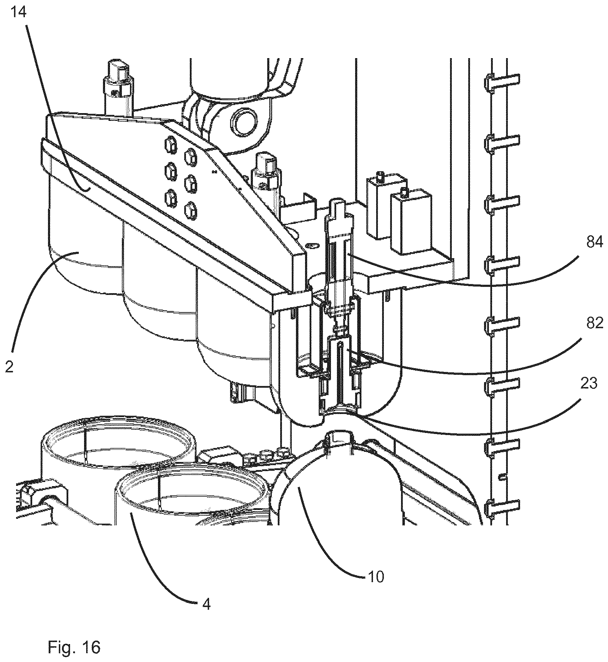

Fig. 16 schließlich zeigt eine Darstellung einer erfindungsgemäßen Vorrichtung. Hier sind wieder die zweiten Halteeinrichtungen 4 dargestellt, wobei es hier unwesentlich ist, ob diese mit der Transporteinrichtung mitbewegt werden oder sich bereits unterhalb der ersten Halteeinrichtungen 2 befinden. Es ist weiterhin eine der ersten Halteeinrichtungen 2 mit deren Innenleben dargestellt. Man erkennt hier ein Stößelelement 82, welches hier in vertikaler Richtung, das heißt der Richtung Y bewegbar ist, in der auch die ersten Halteeinrichtungen 2 auf die Behältnisse 10 zugestellt werden. Zum Lösen der Behältnisse 10 von den ersten Halteeinrichtungen 2 kann dieses Stößelelement 82 nach unten geschoben werden und so das komprimierte Behältnis wegdrücken. Das Bezugszeichen 84 kennzeichnet eine Antriebseinrichtung, wie beispielsweise eine hydraulische und bevorzugt pneumatische Antriebseinrichtung, welche die Bewegung dieses Stößelelements 82 initiiert.

Dieses Stößelelement 82 kann jedoch auch während des Komprimierens eingesetzt werden, um die Mündung 10a des Behältnisses teilweise abzudichten, sodass nur eine definierte Menge an Luft aus dem Behältnis während der Komprimierung entweichen kann. Es wäre jedoch auch möglich, unterschiedliche Elemente einerseits zum Abstoßen der Behältnisse und andererseits zu deren Abdichtung einzusetzen.

### Bezugszeichenliste

- 1: Vorrichtung
- 2: erste Halteeinrichtungen
- 4: zweite Halteeinrichtungen
- 4a, 4b: Teile
- 5: Kunststoffvorformling
- 10: Behältnisse
- 10a: Mündungsbereiche
- 10b: Bodenbereiche
- 10c: Einrollfalte
- 10d: Mündungen
- 12: Transporteinrichtung
- 14: Träger
- 15: Transportband
- 16: Positionsbestimmungseinheit
- 17: Antriebseinrichtung
- 19: Antriebsspindel
- 22: Vorsprung
- 23: Zentrierabschnitt
- 24: Heizeinrichtung
- 25: Übergangsbereich
- 26: Druckbeaufschlagungseinrichtung
- 28: Positionsabfrageeinrichtungen
- 30: Inspektionseinrichtung
- 34: Umformungseinrichtung
- 36: Palettiereinrichtung
- 42: Verschluss, Kappe
- 50: Palette
- 82: Stößelelement
- 84: Antriebseinrichtung

- Y: Zustellrichtung
- X: Transportrichtung
- T: Transportpfad
- Z: Richtung
- R: Radius
- r: Radius

## Patentansprüche

1. Vorrichtung (1) zum Komprimieren von Behältnissen (10) und insbesondere von Kunststoffbehältnissen mit einer ersten Halteeinrichtung (2), welche geeignet ist, einen ersten Bereich (10a) eines zu komprimierenden Behältnisses (10) zu halten mit einer zweiten Halteeinrichtung (4), welche geeignet ist, einen zweiten Bereich (10b) des zu komprimierenden Behältnisses (10) zu halten, wobei der zweite Bereich (10b) von dem ersten Bereich (10a) beabstandet ist, mit einer Bewegungseinrichtung, welche geeignet ist, die erste Halteeinrichtung (2) auf die zweite Halteeinrichtung (4) in einer Zustellrichtung (Y) zu zu bewegen, um das zwischen der ersten Halteeinrichtung (2) und der zweiten Halteeinrichtung (4) befindliche Behältnis (10) zu komprimieren,
wobei
die Vorrichtung eine Transporteinrichtung (12) aufweist, um das Behältnis (10) in einer vorgegebenen Transportrichtung (X), welche sich von der Zustellrichtung (Y) unterscheidet zu transportieren, wobei die Transporteinrichtung geeignet ist, das Behältnis in dieser Transportrichtung (X) in eine Position zu transportieren, in welcher die erste Halteeinrichtung (2) mit dem ersten Bereich (10a) des Behältnisses in Kontakt gelangt,
**dadurch gekennzeichnet, dass**
die Vorrichtung (1) einen Träger (14) aufweist, an dem mehrere erste Halteeinrichtungen (2) zur Aufnahme der ersten Bereiche mehrerer Behältnisse (10) angeordnet sind.

2. Vorrichtung (1) nach Anspruch 1,
**dadurch gekennzeichnet, dass**
die Vorrichtung (1) Positioniermittel (16) aufweist, welche mehrere Behältnisse (10) während ihres Transports mittels der Transporteinrichtung (12) bezüglich einander positioniert.

3. Vorrichtung (1) nach wenigstens einem der vorangegangenen Ansprüche,
**dadurch gekennzeichnet, dass**
die Transporteinrichtung (12) die Behältnisse (10) wenigstens zeitweise getaktet transportiert.

4. Vorrichtung (1) nach wenigstens einem der vorangegangenen Ansprüche,
**dadurch gekennzeichnet, dass**
die zweite Halteeinrichtung (4) sich mit den Behältnissen (10) in der Transportrichtung (X) bewegt.

5. Vorrichtung (1) nach wenigstens einem der vorangegangenen Ansprüche,
**dadurch gekennzeichnet, dass**
an der Transporteinrichtung (12) eine Vielzahl von zweiten Halteeinrichtungen (4) angeordnet ist.

6. Vorrichtung (1) nach wenigstens einem der vorangegangenen Ansprüche,
**dadurch gekennzeichnet, dass**
die Vorrichtung (1) eine in einer Transportrichtung der Behältnisse (10) stromabwärts bezüglich der ersten Halteeinrichtungen (2) angeordnete Inspektionseinrichtung (30) zum Inspizieren der komprimierten Behältnisse (10) aufweist.

7. Vorrichtung (1) nach wenigstens einem der vorangegangenen Ansprüche,
**dadurch gekennzeichnet, dass**
die zweite Halteeinrichtung (4) mehrteilig ausgebildet ist.

8. Verfahren zum Komprimieren von Behältnissen (10) mit den Schritten:
- Bereitstellen von Kunststoffbehältnissen (10);
- Komprimieren dieser Kunststoffbehältnisse (10), wobei eine erste Halteeinrichtung (2), einen ersten Bereich (10a) eines zu komprimierenden Behältnisses (10) hält, eine zweite Halteeinrichtung (4) einen zweiten Bereich (10b) des zu komprimierenden Behältnisses (10) hält, wobei der zweite Bereich (10b) von dem ersten Bereich (10a) beabstandet ist und eine Bewegungseinrichtung die erste Halteeinrichtung (2) auf die zweite Halteeinrichtung (4) in einer Zustellrichtung (Y) zubewegt, um das zwischen der ersten Halteeinrichtung (2) und der zweiten Halteeinrichtung (4) befindliche Behältnis (10) zu komprimieren;
wobei
das Behältnis mit einer Transporteinrichtung (12) in einer vorgegebenen Transportrichtung zu der ersten Halteeinrichtung transportiert wird,
**dadurch gekennzeichnet, dass**
die Vorrichtung (1) einen Träger (14) aufweist, an dem mehrere erste Halteeinrichtungen (2) zur Aufnahme der ersten Bereiche mehrerer Behältnisse (10) angeordnet sind.

9. Verfahren nach Anspruch 8,
**dadurch gekennzeichnet, dass**
mehrere Behältnisse (10) gleichzeitig komprimiert werden.

## Claims

1. An apparatus (1) for compressing containers (10) and in particular plastics material containers using a first holding device (2) that is suitable for holding a first region (10a) of a container (10) to be compressed, with a second holding device (4) that is suitable for holding a second region (10b) of the container (10) to be compressed, wherein the second region (10b) is spaced apart from the first region (10a), with a movement device that is suitable for moving the first holding device (2) towards the second holding device (4) in an infeed direction (Y), in order to compress the container (10) located between the first holding device (2) and the second holding device (4),
wherein
the apparatus has a transport device (12) in order to transport the container (10) in a specified transport direction (X) that is different from the infeed direction (Y), wherein the transport device is suitable for transporting the container in this transport direction (X) into a position in which the first holding device (2) comes into contact with the first region (10a) of the container
**characterized in that**
the apparatus (1) has a carrier (14), on which several first holding devices (2) are disposed for receiving the first region of several containers (10).

2. The apparatus (1) according to claim 1,
**characterized in that**
the apparatus (1) has positioning means (16) that position several containers (10) during the transport thereof by means of the transport device (12) relative to each other.

3. The apparatus (1) as claimed in at least one of the preceding claims,
**characterized in that**
the transport device (12) transports the containers (10), at least at times, in a clocked manner.

4. The apparatus (1) as claimed in at least one of the preceding claims,
**characterized in that**
the second holding device (4) moves together with the containers (10) in the transport direction (X).

5. The apparatus (1) as claimed in at least one of the preceding claims,
**characterized in that**
a multiplicity of second holding devices (4) is provided on the transport device (12).

6. The apparatus (1) as claimed in at least one of the preceding claims,
**characterized in that**
the apparatus (1) has an inspection unit (30) for inspecting the compressed containers (10), which inspection unit is disposed downstream, in a transport direction of the containers (10), in relation to the first holding devices (2).

7. The apparatus (1) as claimed in at least one of the preceding claims,
**characterized in that**
the second holding device (4) is formed in multiple parts.

8. A method for compressing containers (10), comprising the following steps:
- providing plastics material containers (10);
- compressing said plastics material containers (10), wherein a first holding device (2) holds a first region (10a) of a container (10) to be compressed, a second holding device (4) holds a second region (10b) of the container (10) to be compressed, wherein the second region (10b) is spaced apart from the first region (10a) and a movement device moves the first holding device (2) towards the second holding device (4) in an infeed direction (Y), in order to compress the container (10) located between the first holding device (2) and the second holding device (4);
wherein
the container is transported towards the first holding device in a specified transport direction using a transport device (12) **characterized in that**
the apparatus (1) has a carrier (14) on which several first holding devices (2) are disposed for receiving the first region of several containers (10).

9. The method as claimed in claim 8,
**characterized in that**
several containers (10) are compressed substantially at the same time.

## Revendications

1. Dispositif (1) permettant de comprimer des récipients (10) et en particulier des récipients en matière plastique, comprenant un premier système de retenue (2), lequel est adapté à retenir une première zone (10a) d'un récipient (10) à comprimer, un deuxième système de retenue (4), lequel est adapté à retenir une deuxième zone (10b) du récipient (10) à comprimer, dans lequel la deuxième zone (10b) est espacée de la première zone (10a), un système de déplacement, lequel est adapté à déplacer le premier système de retenue (2) en direction du deuxième système de retenue (4) dans une direction d'avance (Y), afin de comprimer le récipient (10) situé entre le premier système de retenue (2) et le deuxième système de retenue (4),
dans lequel
le dispositif comprend un système de transport (12), afin de transporter le récipient (10) dans une direction de transport (X) prédéfinie, laquelle est différente de la direction d'avance (Y), dans lequel le système de transport est adapté à transporter le récipient dans cette direction de transport (X) dans une position dans laquelle le premier système de transport (2) parvient en contact avec la première zone (10a) du récipient,
**caractérisé en ce que**
le dispositif (1) comprend un support (14) sur lequel sont agencés plusieurs systèmes de retenue (2) pour recevoir les premières zones de plusieurs récipients (10).

2. Dispositif (1) selon la revendication 1,
**caractérisé en ce que**
le dispositif (1) comprend des moyens de positionnement (16), lesquels positionnent plusieurs récipients (10) les uns par rapport aux autres pendant le transport de ceux-ci au moyen du système de transport (12).

3. Dispositif (1) selon au moins l'une des revendications précédentes,
**caractérisé en ce que**
le système de transport (12) transporte les récipients (10) en cadence, au moins par intermittence.

4. Dispositif (1) selon au moins l'une des revendications précédentes,
**caractérisé en ce que**
le deuxième système de retenue (4) se déplace avec les récipients (10) dans la direction de transport (X).

5. Dispositif (1) selon au moins l'une des revendications précédentes,
**caractérisé en ce que**
une pluralité de deuxièmes systèmes de retenue (4) sont agencés sur le système de transport (12).

6. Dispositif (1) selon au moins l'une des revendications précédentes,
**caractérisé en ce que**
le dispositif (1) comprend un système d'inspection (30), agencé dans une direction de transport des récipients (10) en aval des premiers systèmes de retenue (2), pour inspecter les récipients (10) comprimés.

7. Dispositif (1) selon au moins l'une des revendications précédentes,
**caractérisé en ce que**
le deuxième système de retenue (4) est réalisé en plusieurs parties.

8. Procédé de compression de récipients (10) comprenant les étapes suivantes :
- fournir des récipients en matière plastique (10) ;
- comprimer ces récipients en matière plastique (10), dans lequel un premier système de retenue (2) retient une première zone (10a) d'un récipient (10) à comprimer, un deuxième système de retenue (4) retient une deuxième zone (10b) du récipient (10) à comprimer, dans lequel la deuxième zone (10b) est espacée de la première zone (10a) et un système de déplacement déplace le premier système de retenue (2) en direction du deuxième système de retenue (4) dans une direction d'avance (Y), afin de comprimer le récipient (10) situé entre le premier système de retenue (2) et le deuxième système de retenue (4),
dans lequel
le récipient est transporté vers le système de retenue dans une direction de transport prédéfinie au moyen d'un système de transport (12) **caractérisé en ce que**
le dispositif (1) comprend un support (14) sur lequel sont agencés plusieurs premiers systèmes de retenue (2) pour la réception des premières zones de plusieurs récipients (10).

9. Procédé selon la revendication 8,
**caractérisé en ce que**
plusieurs récipients (10) sont comprimés simultanément.
